# EUROPEAN PATENT APPLICATION

(11) **EP 2 889 754 A2**
(43) Date of publication of application: **01.07.2015**
(21) Application number: 15160022.8
(22) Date of filing: 20.03.2015
(51) Int. Cl.: G06F 3/14

(54) **TOUCHSCREEN, FREQUENCY CONVERTER AND DRIVE SYSTEM**

(71) Applicant: ABB Technology Oy, 00380 Helsinki (FI)
(72) Inventor: Hu, Zhongliang, 00380 Helsinki (FI); Jokinen, Markku, 00380 Helsinki (FI); Schroderus, Petri, 00380 Helsinki (FI); Tamminen, Mikko, 00380 Helsinki (FI)
(74) Representative: Kolster Oy Ab

(57) **Abstract**

There is provided displaying a user interface during a power outage. A touchscreen comprises a lower layer comprising an electronic paper display and an upper layer comprising a transparent display. The touch screen may be arranged in a frequency converter and a drive system.

## Description

### FIELD

The invention relates to touch screens and particularly to touch screens for frequency converters in drive systems.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change frequency and magnitude of electricity supplied to a load. Frequency converters are being used for example in Alternating Current AC motor drives. In exemplary operation, a frequency converter receives AC current from an electrical power supply and converts the frequency of the received AC current to another frequency after which the AC current is supplied to an AC electric motor. Also further parameters, for example a voltage level, of the received AC current may be changed. The AC motors are used in various applications including for example fans and pumps. In many applications the use of frequency converters can provide significant energy savings compared to supplying electrical power having a constant frequency.

Different operating environments have different requirements for enclosures of electrical devices in order to prevent water, humidity, dirt or dust from entering the electrical devices. The requirements posed on the electrical devices are defined by Ingress Protection (IP) ratings developed by the European Committee for Electro Technical Standardization (CENELEC) (NEMA IEC 60529 Degrees of Protection Provided by Enclosures - IP Code). Accordingly, an IP rating specifies the environmental protection provided by an enclosure meeting the requirements of the IP rating.

Frequency converters are designed and manufactured to meet requirements defined by the IP ratings. For example, in order to meet a high IP rating, the frequency converter can be equipped with a display cover, whereas for a low IP rating the display cover is not used. Different requirements posed by different IP ratings cause that solutions used in frequency converters having different IP ratings are to a significant degree incompatible with each other.

In one example, IP ratings pose requirements for enclosures and connectors on the enclosures of frequency converters. In the present frequency converters displays are connected to the frequency converters by cables that connect to connectors on the enclosure. Due to the different IP ratings, connections between the displays and the frequency converters can be different, which causes a display compatible with one frequency meeting a specific IP rating to be incompatible with another frequency converter meeting another IP rating. Compatibility of displays is challenging to achieve due to different operating environments, while keeping the connectors protected from humidity and dirt, and also without disproportionally increasing costs.

A malfunctioned connector, for example due to corrosion or physical damage to the connector, can prevent connecting a display to the frequency converter, which can cause a service break to the frequency converter. The service break degrades the operational efficiency of the frequency converter and all the systems that rely on the operation of the frequency converter.

Frequency converter displays are powered by electricity received from the frequency converter over the cabling. The supply of electricity may be cut-off by a power outage, which may be caused by a fault in a frequency converter. During the power outage the display does not receive power from the frequency converter and the frequency converter display ca not be used for displaying a user interface of the frequency converter or for fault management purposes of the frequency converter.

### BRIEF DESCRIPTION

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide displaying a user interface on a touchscreen during power outage.

Some embodiments provide a frequency converter operable by a touchscreen capable of displaying a user interface of the frequency converter during power outage.

### BRIEF DESCRIPTION OF THE DRAWINGS

In the following the invention will be described in greater detail by means of preferred embodiments with reference to the attached drawings, in which
Figure 1 illustrates an example of a touchscreen according to an embodiment;
Figures 2a and 2b illustrate examples of frequency converters comprising touchscreens according to embodiments;
Figures 3a and 3b illustrate examples of operational states in a touchscreen according to an embodiment; and
Figure 4 illustrates an example of an arrangement of layers of a touchscreen according to an embodiment.

### DETAILED DESCRIPTION OF THE INVENTION

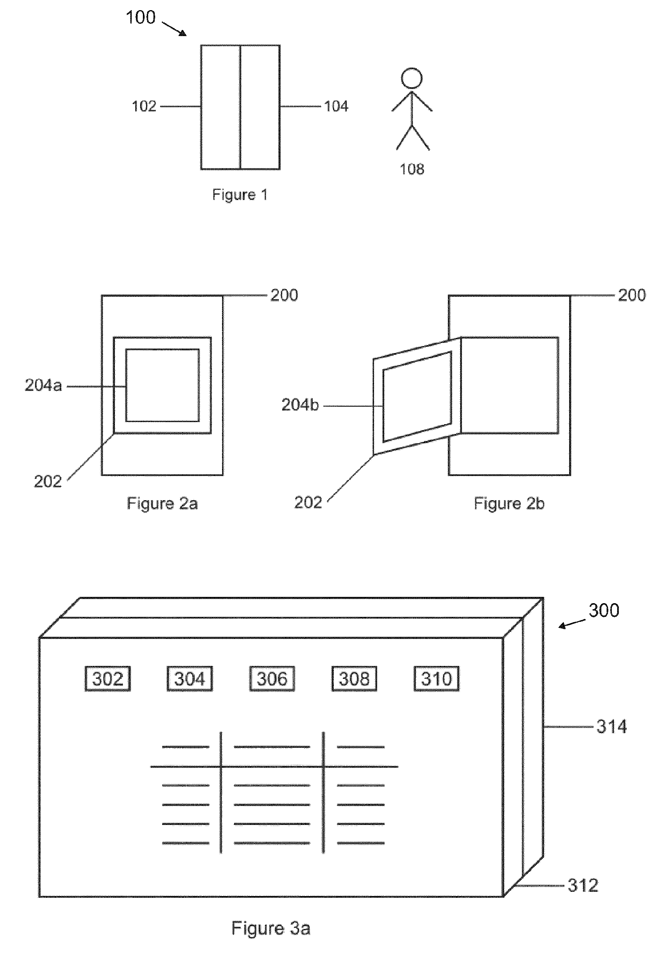

Figure 1 illustrates an example of a touchscreen 100 according to an embodiment. The touchscreen comprises a lower layer comprising an electronic paper display 102 and an upper layer comprising a transparent display 104. The lower layer may be located under the transparent display such that the transparent display is between a user 108 viewing the display and the electronic paper display. In this way information displayed on the transparent display is positioned on top of the information displayed on the electronic paper display.

The touchscreen may be connected to a power supply, for example a battery and/or an external power source. The power supply may supply electricity to the transparent display and to the electronic paper display. The electronic paper display may be capable of displaying information without being supplied electricity from the power supply, for example during a power outage. The power outage may be caused for example by a discharged battery, fault of the external power source and/or a connection failure to the external power source. However, electricity may be needed for updating the information displayed on the electronic paper display. The transparent display may be capable of selectively obstructing visibility of the electronic display under the transparent display. The visibility may be selectively obstructed by information displayed on the transparent display. Since the transparent display may be on top of the electronic paper display, the information displayed on the electronic display may be selectively visible and/or highlighted by the information displayed on the transparent display. The transparent display may display information only, when being supplied electricity from the power supply. An example of the transparent display is TASEL display manufactured by Beneq Products Oy.

Preferably the sizes of the transparent display and the electronic paper display are the same such that display areas of the displays substantially match. However, in some implementations the displays may be of different sizes such that the display areas are different. In one example, the display area of the transparent display may be greater than the display area of the electronic paper display such that the transparent paper display may extend over a larger area and beyond at least one edge of the electronic paper display or beyond more than one edge, for example two, three or four edges, of the electronic paper display.

The touchscreen may comprise a sensor for sensing human touch. The sensor may be capable of sensing human touch on the basis of a change in capacitance or resistance caused by a user's touch on the touchscreen. The sensor may cover the transparent display for sensing the human touch on the covered area. In one example of a capacitive sensor, a thin layer of conductive film may be arranged on the transparent display for sensing touches applied by the user on the touchscreen. The conductive film may be of indium tin oxide (ITO) and the transparent display may be of electrically insulating material, for example glass. A touch of the user may cause a change in capacitance that may be used to detect the touch and the touched location on the transparent display.

In an embodiment the touch screen may be curved. The touch screen may be curved around a vertical axis, for example. The curved touch screen may be positioned on a front cover of a frequency converter such that information displayed on the frequency converter may be viewed in a sector opening before the frequency converter. Accordingly, curved display allows an increased viewing angle for the touch screen, which is particularly useful for displays having a limited viewing angle, for example 5 degrees or 10 degrees. Accordingly, the viewing angle of the curved touch screen may be for example double the viewing angle of a non-curved touch screen. As a further difference to the non-curved touch screen, the whole display area of the curved touch screen may not be viewed throughout the increased viewing angle. However, the information displayed on the touch screen may be adjusted to take into account this property. However, thanks to the curved touch screen, critical information, for example operational state information, may be indicated efficiently on the increased viewing angle. Examples of the operational state information comprise a color, for example red, yellow or green, which may correspond to alert, warning, and OK conditions in respective order to the colors. The operational state information may be displayed on the whole display area such that, the operational state information may be viewed in the increased viewing angle provided by the curved display.

In an embodiment the touchscreen may be capable of displaying a user interface of a frequency converter. The user interface may be displayed on the electronic paper display and the transparent display. The electronic paper display and the transparent display may comprise the same, partly the same or different elements of the user interface. The elements of the user interface may comprise graphical elements for example one or more of a menu and parameters of the frequency converter. The touchscreen and the frequency converter may comprise data transfer means for transferring data comprising the user interface to be displayed on the touchscreen. The touchscreen and the frequency converter may be connected by a data transfer connection provided by the data transfer means.

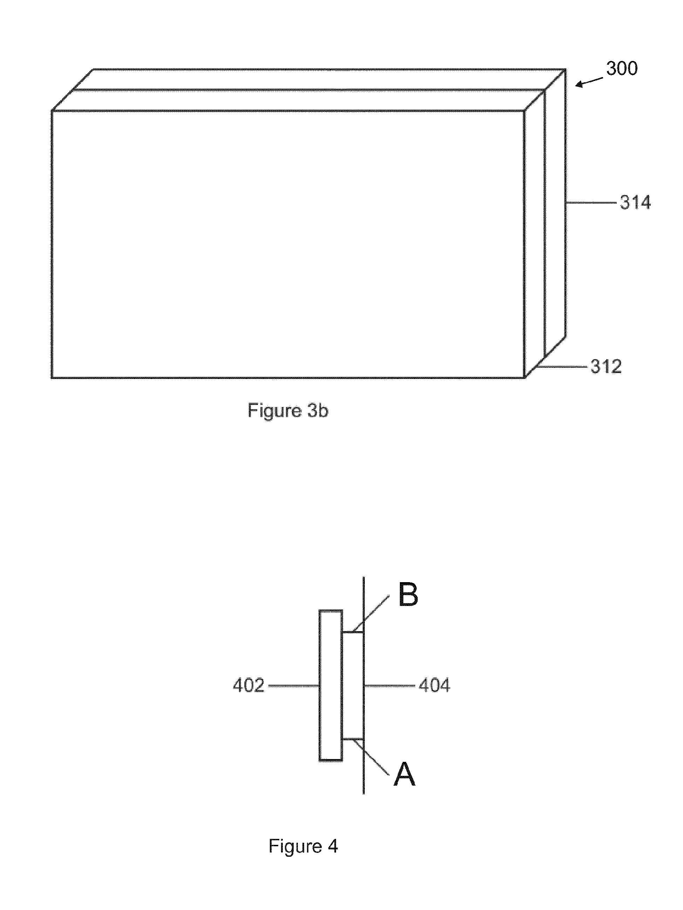

In an embodiment, elements of the user interface of the frequency converter displayed on the electronic paper display and the transparent display may have different colours. Preferably the colours have a high contrast between each other. In this way the elements on different displays may be recognized by a user. The touch screen may have layers arranged as described in Figure 4, whereby the high contrast provides improved visibility of the user interface even with a very limited capability of the transparent display to represent colours. Accordingly, the colours of the elements on the transparent display may be selected as different colours, preferably having a high contrast, to one or more of the colours of the elements displayed on the electronic paper display. The colours may be defined by ranges of wavelengths of visible light.

The touchscreen may be installed to a frequency converter such that the user interface for the frequency converter may be designed and manufactured even without any buttons to facilitate conformance with requirements of various IP ratings. On the touchscreen, selections of the user may be obtained by gestures that may include a single touch gesture of the user and/or a multi-touch gesture of the user. The multi-touch gesture may refer to a gesture, where the user touches substantially simultaneously the display area of the display at two or more points of contact. The points of contact may move. Accordingly, the multi-touch gesture allows flexibility to the design of the user interface and in interpretation of the user's selections.

Power may be supplied from the power supply to the touchscreen by a cable or by a wireless power transfer. The wireless power transfer may be provided by inductive power transfer between the power supply and the touchscreen. For inductive power transfer, the touchscreen and the power supply may comprise inductive power transfer means such that electricity may be transferred from the power supply to the touchscreen by way of induction. Examples of the inductive power transfer means comprise coils.

The inductive power transfer may be based on electromagnetic induction between the power supply and the touchscreen. The electromagnetic induction causes an electric current in the display such that the display is powered by the induced current from the power supply. Since the display is powered by inductive power transfer from the frequency converter, the enclosure may be manufactured and designed without openings for power cables of the display. Since there are no openings for the power cables of the display, the enclosure meets many different IP ratings without needing to redesign the enclosure. In this way also the same enclosure may be manufactured and used in frequency converters to meet different IP ratings.

The inductive power transfer between the power supply and the touchscreen may follow a principle of an inductively coupled power transfer including a transmitter transfer head, e.g. transmitter coil L1, in the power supply and a receiver transfer head, e.g. a receiver coil L2, in the touchscreen. Both transfer heads form a system of magnetically coupled inductors. An alternating current in the transmitter transfer head may generate a magnetic field which induces a voltage in the receiver transfer head. This voltage can be used to feed electrical power to the touchscreen, e.g. to the transparent display and/or the electronic paper display.

In an embodiment, a touch screen 100 may comprise a controller connected to the electronic paper display and the transparent display. The controller may be further connected to a memory for storing instructions to be executed by the processor. The at least one memory and the instructions are configured to, with the at least one controller, cause the touch screen at least to perform a functionality according to an embodiment. The instructions may comprise program code for execution on the controller. The program code may be a computer program code. The controller may be a processor.

The controller may be connected to wireless power transfer means and/or to data transfer means. The controller may obtain information from the data transfer means and/or the wireless power transfer means. The obtained information may be used to determine one or more of an operational state of the touch screen, switching on/off displays, gestures applied to the touch screen, information to be displayed on the electronic paper display, information to be displayed on the transparent display and colours of the displayed information. The controller may control the displays of the touch screen on the basis of results of the determined operational state(s). Connections between the controller and other units of the touch screen described above may be provided by electrical conductors, for example wires, cables and/or buses.

Figures 2a and 2b illustrates example of frequency converters comprising touchscreens according to embodiments. An example of the touchscreens is described with Figure 1. The touchscreen may be capable of displaying a user interface of the frequency converter. The user interface may be transferred to the touchscreen via a data transfer connection from the frequency converter. The data transfer connection may be provided by an inductive connection for the inductive power transfer or by a wireless radio frequency communications. For data transfer over an inductive connection, coil antennas may be used in transfer heads used in the inductive power transfer.

Alternating current may be supplied to a transfer head, e.g. a coil, for inductive power transfer to the display via the transfer head. The data transfer may be provided by modulating the alternating current fed to the transfer head. The data signal may comprise data symbols according to a modulation scheme. The alternating current may be fed to the transfer head and received at the touchscreen by a receiver transfer head. The received alternating current in the receiver transfer head may be demodulated to obtain the data signal. Accordingly, in this way transfer heads in the inductive power transfer may serve for both power transfer and data transfer. For a two-way data transmission both the modulation and de-modulation may be performed in both the touchscreen and the frequency converter as described above. The data transfer functionalities, for example modulation and de-modulation, may be provided in the frequency converter and/or the touchscreen by dedicated units. Examples of the units comprise a modulator and a demodulator. On the other hand the data transfer functionalities may be combined into other units of the frequency converter and/or the touchscreen.

The wireless radio frequency communications may be provided by a radio communications interface. The radio communications interface may be provided by a module or circuitry that may be connected to the frequency converter and/or to the touchscreen, for example to inductive power transfer means.

The wireless radio frequency communications may comprise radio frequency communications on a frequency band that is reserved internationally for the use of radio frequency energy for Industrial, Scientific and Medical (ISM) purposes. The ISM frequency bands may comprise for example 100 MHZ wide frequency band centered at 2.450 GHz.

In one example, the radio frequency communications may be provided by Near Field Communications (NFC). The NFC enables devices to establish radio communications with each other by touching them together or bringing them into proximity, typically a distance of 10 cm or less. The NFC uses electromagnetic induction between two loop antennas located within each other's near field, effectively forming an air-core transformer. Further examples of the radio frequency communications comprise Bluetooth communications and Wi-Fi communications. Circuitries and modules for implementing the Wi-Fi, Bluetooth and NFC communications are commercially available.

The frequency converter may comprise an enclosure, where the touchscreen may be installed to an installation position. The enclosure may be of a material having a good permeability of electromagnetic waves. The electromagnetic waves may be communications signals and/or electromagnetic waves for inductive power transfer. In one example, the enclosure may be of plastics. Also other composite materials may be used. The installation position may include one or more portions of the surface of the enclosure. The portion may be defined by the material of the enclosure and/or by an area of the surface of the enclosure, where a touchscreen and/or a transfer head are arranged.

The installation position may be matched to the touchscreen such that the touchscreen may be in contact with the enclosure at the installation position or the touchscreen may be positioned at a very small distance from the installation position. Preferably the forms of the touchscreen and the installation position are matched such that the forms e.g. curvatures, straight or curved, of the touchscreen and the installation position may correspond to each other at least substantially. The matching forms of the touchscreen and the installation position may provide a close fit between the touchscreen and the enclosure such that efficient transfer of electrical energy and/or data through the enclosure may be provided.

Preferably an installation position provides mobility to a touchscreen installed to the installation position. In this way a user, for example an operator of the frequency converter, may install the touchscreen to the installation position for operating the frequency converter and remove the touchscreen to be used for other tasks away from the frequency converter. In one example of other tasks, the touchscreen may be installed to another frequency converter for operating it.

Figures 2a and 2b illustrate examples of the frequency converter 200 having an enclosure comprising a front cover 202 that serves as an installation position for a touchscreen 204a, 204b. The front cover may be a door or panel that may be moved, from a closed position to an open positon. In the closed position, the contents of the enclosure are protected by the front cover. In the open position, the contents of the enclosure not protected by the front cover and they may be subjected to dirt. However, the open position may be necessary for service of the frequency converter. The front cover may be attached to the enclosure for movement by hinging or sliding such that the front cover may move between the open and closed positions. The front cover may comprise an outer surface and an inner surface, and the touchscreen may be installed to the outer surface, the inner surface or both the outer and inner surfaces of the front cover. In the example of Figure 2a, the touchscreen 204a is installed on the outer surface of the front cover. In this way the touchscreen may be operated and viewed, when the front cover is closed. In the example of Figure 2b, the touchscreen 204b is installed on the inner surface of the front cover. In this way the touchscreen may be protected, when the front cover is closed.

In an embodiment, touchscreens 204a, 204b may be installed on an outer surface and an inner surface of the front cover 202. Accordingly, the frequency converter may have two touchscreens on the front cover. The touchscreens may be installed as described in Figures 2a and 2b. Two touchscreens on the front cover allow a user to view and operate the user interface both when the front cover is closed and when the front cover is open, even if the front cover is hinged to the enclosure such that the front cover is movable between the closed position, where the outer surface of the front cover is facing the user, and the open position, where the inner surface is facing the user. The hinging of the front cover may allow substantially 180 degrees rotation of the front cover. Accordingly, the user may view the user interface in the closed position of the front cover and in the open position of the front cover without changing his/her position. It should be appreciated a touchscreen may be installed to other locations on the enclosure than to the front cover. The enclosure may comprise support structures and/or protrusions that serve as installation positions for the touch screen. Accordingly, the touchscreen may be installed to the front cover and to frequency converters that may not have a front cover serving as the installation position on the enclosure. It should be appreciated that, the front cover may be moveable between a closed position and an open position by a sliding movement, whereby a single touch screen may be sufficient for viewing and operating the user interface both when the front cover is closed and when the front cover is open. The sliding movement may be provided by rails that connect the front cover to the enclosure.

In an embodiment, the frequency converter described above may be a part of a drive system, for example a variable speed drive system or a variable frequency drive system. The drive system may include an electric motor, for example an AC motor, and the frequency converter may be connected to the electric motor for supplying electrical power to the motor. The drive system may further include a Programmable Logic Controller (PLC) consisting of one or more a Central Processing Units (CPUs), Input/Output (I/O) modules, communication modules, and/or communication interface modules. A CPU may comprise one or more processors and memory that are electrically connected such that data for example software code stored to the memory may be executed in the processor(s).

The frequency converter has an input, where it is capable of receiving electrical power from an electrical power supply. The frequency converter has an output that is capable of supplying electrical power obtained by converting the frequency and/or further characteristics of the electrical power received in its input. The electrical power supplied by the frequency converter can have a different frequency than the input electrical power, since the frequency of the input electrical power may be converted by the frequency converter to match properties of the electrical motor and/or properties of a pump or fan driven by the electric motor.

Figures 3a and 3b illustrates examples of operational states in a touchscreen 300 according to an embodiment. The touchscreen may comprise a lower layer comprising an electronic paper 314 display and an upper layer comprising a transparent display 312. An example of the touchscreen is described with Figure 1. The touchscreen may be connectable to a power supply for supplying power to the electronic paper display 314 and to the transparent display 312 in at least one of the operational states. The touchscreen may comprise operational states comprising a first state illustrated in Figure 3a, where both the electronic paper display and the transparent display are capable of displaying information, and a second state illustrated in Figure 3b, where only the electronic paper display is capable of displaying information and the transparent display is clear, i.e. information is not displayed on the transparent display. The touchscreen may be capable of displaying a user interface of a frequency converter, whereby at least a part of the user interface may be displayed on the electronic paper display and at least a part of the user interface may be displayed on the transparent display. Preferably the transparent display may display dynamic elements 302, 304, 306, 308, 310 of the user interface and the electronic display may display less dynamic information, for example text. Accordingly, the information displayed on the transparent display may have a higher update rate than the information displayed on the electronic paper display. Examples of the dynamic elements comprise interactive elements that may be selected by a user. Selection of the dynamic element may cause that information displayed on the touch screen is changed. Examples of the less dynamic elements comprise non-interactive elements that cannot be selected by the user. The selection may be effected by the user via capability of the touch screen of sensing gestures. Since the dynamic elements and less-dynamic elements are displayed on different parts, i.e. the electronic paper display and the transparent display, they can be differentiated by the user. Accordingly, the user can identify between elements that are displayed on the electronic paper display and elements that are displayed on the transparent display. When the elements comprise one or more interactive or non-interactive elements, the user may identify directly from the displayed elements, whether the element may be selected. This is particularly useful for elements for controlling the frequency converter or a drive system, where the frequency converter is included, because the user can identify whether he/she can control the frequency converter or the drive system via the touch screen. The elements displayed on the electronic paper display and the transparent display may be identified by different colors as described above.

In the first operational state both of the displays may be powered, 'ON', and displaying information. When the displays are powered, the user may apply gestures to elements displayed on the displays. In the second state, only the electronic paper display is powered, 'ON', and the transparent display is not capable of displaying information and is 'OFF'. In one example the second state corresponds to a power outage situation, where electricity is not supplied to the touchscreen from the power supply. In the power outage situation, gestures cannot be applied on the touchscreen for using the touchscreen. On the other hand the second state may be a power save mode, where the touchscreen consumes less power thanks to the electronic display and switching off the transparent display. In the power save mode gestures of the user may be applied on the touchscreen. Since the transparent display is off, only elements displayed on the electronic paper display may be visible for the user for applying gestures on the elements. The power save mode may be entered after a time period has passed after last gesture from the user on the touchscreen. Examples of time periods comprise 5s, 10s and 1 minute.

Figure 4 illustrate an example of an arrangement of layers of a touchscreen according to an embodiment. The touchscreen may comprise a lower layer comprising an electronic paper 404 display and an upper layer comprising a transparent display 402. An example of the touchscreen is described with Figure 1. The touchscreen may be installed to an installation position on an enclosure of a frequency converter. The display area of the transparent display may be greater than the display area of the electronic paper display such that the transparent paper display may extend over a larger area and beyond at least one edge A, B of the electronic paper display. It should be appreciated that the transparent display may extend beyond more than one edge, for example two, three or four edges, of the electronic paper display. Since the transparent display extends over a larger area and beyond at least one edge of the electronic paper display, the installation position on the enclosure may be visible through the transparent display.

In an embodiment, a touch screen may be installed to an installation position on an enclosure of the frequency converter for displaying a user interface of the frequency converter. Accordingly, the touchscreen may be capable of displaying a user interface of a frequency converter. An example of the touch screen is described with Figure 1. At least one colour of the user interface has a high contrast with the enclosure. The high contrast may be provided by the colours of the user interface displayed on the touch screen and the enclosure being different. The touch screen may have layers arranged as described in Figure 4, whereby the high contrast provides improved visibility of the user interface even with a very limited capability of the transparent display to represent colours.

The techniques described herein may be implemented by various means so that an apparatus implementing one or more functions of a touchscreen or a frequency converter described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. A hardware implementation may be through one or more circuits, for example Application Specific Circuits (ASICs). For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. A touchscreen comprising a lower layer comprising an electronic paper display and an upper layer comprising a transparent display.

2. A touchscreen according to claim 1, wherein the touchscreen comprises operational states comprising a first state, where both the electronic paper display and the transparent display are capable of displaying information, and a second state, where only the electronic paper display is capable of displaying information.

3. A touchscreen according to claim 2, wherein the transparent display is switched off, after a time period has passed after last gesture from the user on the touchscreen.

4. A touchscreen according to any one of claims 1 to 3, wherein the touch screen is curved.

5. A frequency converter comprising a touchscreen according to any one of claims 1 to 4.

6. A frequency converter according to claim 5, wherein the frequency converter comprises a front cover and an electronic display is installed on the front cover.

7. A frequency converter according to claim 5 or 6, wherein the transparent display has a display area that is greater than a display area of the electronic paper display.

8. A frequency converter according to any one of claims 5 to 7, wherein the touchscreen is capable of displaying a user interface of the frequency converter, whereby at least a part of the user interface is displayed on the electronic paper display and at least a part of the user interface is displayed on the transparent display.

9. A frequency converter according to claim 8, wherein the user interface comprises elements having a high update rate and low update rate and the elements having a high update rate are displayed on the transparent display and the elements having a low update rate are displayed on the electronic paper display.

10. A frequency converter according to claim 8 or 9, wherein the user interface comprises elements displayed on the electronic paper display and the transparent display, and the elements displayed on the electronic paper display and the transparent display have different colours.

11. A drive system comprising a frequency converter according to one of claims 5 to 10.
